# EUROPEAN PATENT APPLICATION

(11) **EP 3 357 871 A1**
(43) Date of publication of application: **08.08.2018**
(21) Application number: 15905386.7
(22) Date of filing: 30.09.2015
(51) Int. Cl.: C02F 3/06

(54) **WASTEWATER TREATMENT CARRIER, WASTEWATER TREATMENT CARRIER MODULE, WASTEWATER TREATMENT CARRIER UNIT, AND WASTEWATER TREATMENT DEVICE**

(71) Applicant: Bitech Co., Ltd., Tokyo 114-0003 (JP)
(72) Inventor: HASEGAWA Moriju, Tokyo 175-0092 (JP); AMINO Nobushige, Yamato-shi Kanagawa 242-0005 (JP); ISHIHARA Kazumi, Tokyo 114-0003 (JP)
(74) Representative: Murgitroyd & Company
(86) International application number: PCT/JP2015/077726
(87) International publication number: WO 2017/056232

(57) **Abstract**

With prior-art biofilm treatment methods involving the use of microorganism carriers, the microorganism carrier filter beds get blocked as the biofilms grow, highly concentrated organic wastewaters, oily/fatty wastewaters, etc. cannot be stably treated, the appreciable costs incurred in dehydrating, drying, and incinerating the reduced-volume sludge of the generated excess sludge, treating the incineration ash, etc., are further increased, compounding the financial considerations relating to various spheres of operation. A wastewater treatment carrier comprises a core portion and a microorganism holding portion, wherein the microorganism holding portion is formed with multi-threads characterizing in that the fibers of the multi-threads are formed in a relaxed state so that the fibers can be spaced apart from each other in the wastewater with forming in multiple stages and a loop. The invention can also be adapted to high-concentration organic wastewater and/or inflowing raw water having high load variability. The invention is also suitable for improving existing aerobic treatment tanks, and allows excess sludge and/or odor generation to be minimized. Moreover, the invention can be stably preserved for extended periods of time with a simple maintenance operation, and can yield stable treatment water quality.

## Description

### TECHNICAL FIELD

The present invention relates to wastewater treatment carrier, wastewater treatment carrier module, wastewater treatment carrier unit and wastewater treatment apparatus for purifying wastewater by using the microorganism.

### BACKGROUND ART

Conventionally, the high concentration organic wastewater of the aerobic microorganisms carriers that have been used to process, which was arranged regularly single fibers, and the fibers trap suspended solids to provide the required quality of treated water (refer to Patent Literatures 1 and 2).

In conventional wastewater treatment, easily filtered and obstruction microorganism aerobic microorganisms carrier accumulation, also because the sludge produced in the peripheral carrier comes off, it requires periodic or timely cleaning as a countermeasure. Further, weak load fluctuation of the high concentration inflow wastewater, oil draining, it is not suitable for detergent drainage. Therefore, after anaerobic microorganisms carrier process, by combining the aerobic microorganisms carrier process, to obtain the required quality of treated water (refer to Patent Literature 3).

### PRIOR ART LITERATURES

### PATENT LITERATURES

Patent Literature 1: Japanese Patent Publication No. JP-H6-65291
Patent Literature 1: Japanese Patent Laid-open Publication No. 2012-045536
Patent Literature 3: Japanese Patent Laid-open Publication No. 2008-029943

### DISCLOSURE OF INVENTION

### PROBLEM TO BE SOLVED BY THE INVENTION

Traditionally, most of the wastewater treatment apparatus in operation consumes large aeration energy, and discharges industrial waste as excess sluge which is 30% to 40% of organic matter to be removed.

In the case of the processing apparatus which combines anaerobic microorganisms carrier process and aerobic microorganisms carrier processes also discharges industrial waste as excess sluge which is 10% to 20% of organic matter to be removed.

Further, in the previous biological membrane treatment method, since a short circuit or filtration obstruction of the water flow is generated by the growth of biofilm, biofilm hypertrophic the backwash process of the filter bed with the air flow by increasing periodically the intensity of aeration and washing off process by increasing the intensity of aeration are required. However, in the conventional microorganism carrier, a large tensile force or shearing force operate to the fiber at the time of backwashing, and fiber tends to wear damage.

The object of the present invention is to provide a wastewater treatment carrier makes filtration blockage of microorganism carrierunlikely, even though the growth of the biofilm advances and lead to thickening of it..

Moreover, the object of the present invention is to provide a wastewater treatment carrier module, a wastewater treatment carrier unit and a wastewater treatment apparatus which can suppress the occurrence of excess sludge and which allows a stable wastewater treatment over a long period even when applied to a high concentration of organic wastewater treatment.

### MEANS FOR SOLVING PROBLEM

The present invention has been made in order to achieve the above object, a wastewater treatment carrier of the first invention is a wastewater treatment carrier comprises a core portion and a microorganism holding portion, wherein the microorganism holding portion is formed with multi-threads characterizing in that the fibers of the multi-threads are formed in a relaxed state so that the fibers can be spaced apart from each other in the wastewater with forming in multiple stages and a loop.

Wastewater treatment carrier of the second invention according to the first invention , the multi-thread is characterized in that a hydrophilic fibers.

Wastewater treatment carrier of the third invention according to the first invention, the multi-thread is characterized in that a hydrophobic fibers.

Wastewater treatment carrier of the fourth invention according to the first invention, the multi-thread is a mixed multi- fiber obtained by mixing a hydrophilic fiber and a hydrophobic fiber.

Wastewater treatment carrier of the fifth invention according to the one of wastewater treatment carrier of the first to fourth invention, the multi-thread is characterized in that multi-twisted multi-thread.

Wastewater treatment carrier modules of the sixth invention is the wastewater treatment carrier module formed by arranging a plurality of wastewater treatment carrier in parallel, the wastewater treatment carrier is characterized in that the wastewater treatment carrier of any one of the first to fifth inventions.

Wastewater treatment carrier modules of the seventh invention is characterized by comprising parallel arranged wastewater treatment carrier according to the second invention and wastewater treatment carrier according to the third invention alternately.

Wastewater treatment carrier unit of the eighth invention is characterized in the wastewater treatment carrier modules of the sixth invention or the seventh invention are multiple parallel arrangement of, and it comprises air diffusers thereunder.

Wastewater treatment apparatus of the ninth invention is a wastewater treatment apparatus having a wastewater treatment carrier module of the sixth or seventh invention in the processing tank, the lower part of the wastewater treatment support module of the processing tank is characterized in that it has an air diffuser.

### EFFECT OF THE INVENTION

Wastewater treatment support according to the present invention, forms a multi-thread microorganism holding portion comprises a plurality of fibers in a relaxed state such that the fibers of the multi-thread in the wastewater with forms in multiple stages and a loop can be separated from each other are those which are, while having a moderate shear strength relative to the wastewater flow through the wastewater treatment tank, a high filter layer spatial index such as flowering intertwined large multiple yarn each other in surface area is formed.

As a result, in wastewater treatment apparatus using the wastewater treatment carrier of the present invention, hardly occurs filtration obstruction of the carrier, the dissolved oxygen to the microorganisms layers is also stably supplied.

Further, occurrence of excess sludge is inhibited more than 80% compared to conventional wastewater treatment apparatus.

When using the wastewater treatment carrier that combines hydrophilic and hydrophobic fibers (the fourth invention) or wastewater treatment module (seventh invention), sludge suppression effect higher.

The hydrophilic fibers, organic substances in wastewater water-soluble are easily attached, microorganisms easily adhere proliferation. The hydrophobic fibers, oil and fat or a surfactant such as flame-degradable organic substances in the wastewater is likely to adhere.

Therefore, with adhesion of the organic substances by the synergistic effect of a combination of hydrophilic and hydrophobic fibers is remarkably improved, so that the food chain of microorganisms persists. As a result, it is possible to stably maintain continuity of treated water, the generation of sludge can be suppressed.

The hydrophilic fibers as referred to in the present invention, a fiber having a easily gets wet hydrophilic group (hydroxyl group), for example, nylon, acrylic, polyester, vinylon, carbon fiber, promix, acetate, hemp, cotton, rayon, silk, there is a wool and the like. When used in a high temperature range from room temperature (10 °C to 60 °C) include nylon, vinylon is desirable, in cold use (10 °C or less), acrylic, carbon fibers desirable.

The hydrophobic fiber as referred to in the present invention, a fiber having a had hardly exposed to water affinity group (hydrocarbon group), for example, vinylidene, polyvinyl chloride, olefin polypropylene, polyethylene, ferrous metals fibers etc. is there.

Among these, vinylidene, polyvinyl chloride is most suitable regardless of the use environment.

Since multiple yarn according to the present invention is an aggregate of a plurality of fibers, a large surface area per unit length. As a result, an effect of increasing the microorganism total is obtained.

Wastewater treatment carrier module or wastewater treatment carrier unit according to the present invention is capable installed wastewater treatment layer of the existing, existing activated sludge treatment apparatus or the like can be modified in aerobic wastewater treatment layer. Moreover, since it is difficult to occur filtration blockage of the support, by controlling the amount of air supplied, it is possible to also exhibit facultative anaerobic treatment works with aerobic treatment function. Therefore, it is unnecessary to separately anaerobic treatment process is compact allowing remodeling.

Thus, stable maintenance continued control suppression and treated water omissions and excess sludge anaerobic treatment process of the conventional wastewater treatment apparatus can be realized.

### BRIEF DESCRIPTION OF DRAWINGS

[FIG. 1] A schematic diagram showing the structure of a wastewater treatment carrier according to the present invention
[FIG. 2] A schematic diagram showing a structure of a wastewater treatment twisted carrier according to the present invention
[FIG. 3a] A schematic diagram showing a multi-thread according to the present invention, 3a is a schematic diagram of an extended state
[FIG.3b] A schematic diagram showing a multi-thread according to the present invention, 3b is a schematic diagram of a relaxed state
[FIG.3c] A perspective view of FIG.3a
[FIG.3d] A perspective view of FIG.3b
[FIG.-4a] A schematic diagram showing a mixed multi-thread of hydrophilic and hydrophobic fibers according to the present invention, FIG.4a is a schematic view of the extended state
[FIG.4b] A schematic diagram showing a mixed multi-thread of hydrophilic and hydrophobic fibers according to the present invention, FIG.4b is a schematic diagram of a relaxed state
[FIG. 5a] A schematic diagram showing a multi-twisted multi-thread according to the present invention, FIG.5a is a schematic view of the extended state
[FIG.5b] A schematic diagram showing a multi-twisted multi-thread according to the present invention, FIG.5b is a schematic diagram of a relaxed state
[FIG.6a] A schematic diagram showing a mixed multi-twisted multi-thread of hydrophilic and hydrophobic fibers according to the present invention, FIG.6a is a schematic view of the extended state
[FIG.6b] A schematic diagram showing a mixed multi-twisted multi-thread of hydrophilic and hydrophobic fibers according to the present invention, FIG.6b is a schematic diagram of a relaxed state
[FIG.7] A schematic diagram showing a structure of a wastewater treatment carrier module according to the present invention
[FIG. 8] A schematic diagram showing a structure of a wastewater treatment carrier module in which a hydrophilic wastewater treatment carrier and a hydrophobic wastewater treatment carrier according to the present invention are arranged in parallel
[FIG. 9] A schematic diagram showing a structure of a wastewater treatment carrier unit according to the present invention
[FIG. 10] A schematic diagram showing a state in which a wastewater treatment carrier unit according to the present invention is installed in a wastewater treatment apparatus
[FIG. 11] A schematic diagram of a conventional wastewater treatment apparatus
[FIG. 12] A schematic diagram showing the whole of the wastewater treatment apparatus according to the present invention
[FIG. 13a] A table showing a result of the wastewater treatment test by the wastewater treatment apparatus according to the present invention
[FIG. 13b] A table showing a result of a wastewater treatment test by an existing (conventional) wastewater treatment apparatus

### BEST MODE(S) FOR CARRYING OUT THE INVENTION

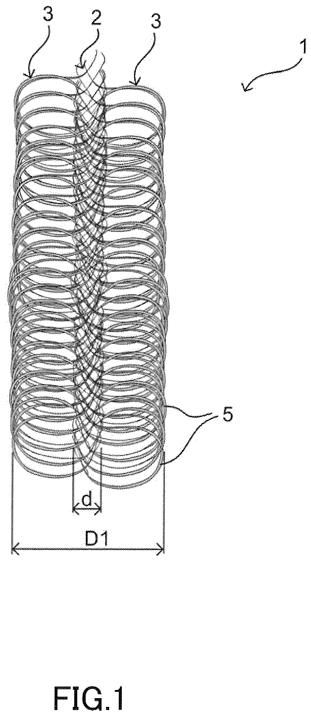

The structure of the wastewater treatment carrier 1 according to the present invention is typically shown in FIG. 1.

The wastewater treatment carrier 1 includes the core portion 2 and the microorganism holding portion 3. The microorganism holding portion 3 forms the multi-threads 5 in multiple stages and looped state.

The core portion 2 plays a role of stem supporting said microorganism holding portion 3. The material or the like is not particularly though, in this embodiment, it has been formed by weaving to proceed inclined multi-threads 5 in the longitudinal direction of the core portion 2, a high density in comparison with the microorganism holding portion 3 woven and maintains the carrier strength. In the core portion 2 may be formed so as weaving multi-threads 5 on belt member extending in the longitudinal direction of the core portion 2.

Width d of the core portion 2 is desirably larger than 8mm to support the strength of the carrier. Since the microorganism retention as the whole carrier will fall if the width d enlarges too much, it is desirable that it is 20 mm or less. And more preferably it is in the range of 10 mm to 12 mm.

Wherein the enhanced microorganism growth capacity of the microorganism holding portion 3 is towards the width of the microorganism holding portion 3 is large is desired, the shear strength of the too large microorganism holding portion is reduced. Therefore, for stable persistence maintenance of wastewater purification capacity, the width D₁ of the microorganism holding portion 3 is, 60 mm or more, it is desirable that less than 100mm. And more preferably it is in the range of 70 mm to 80 mm.

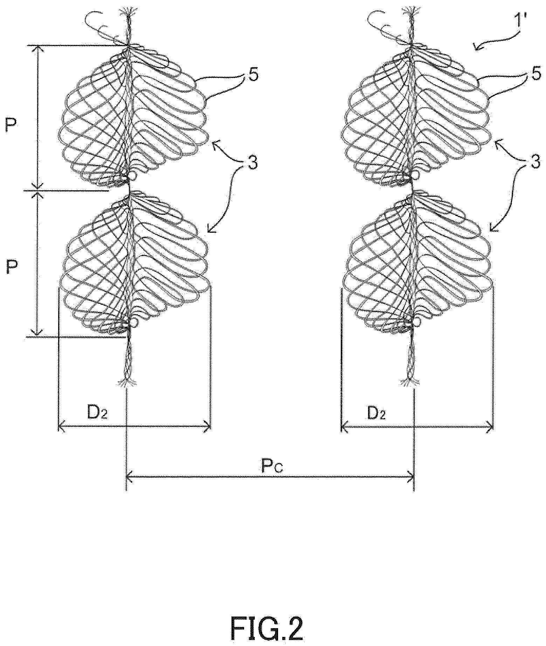

The microorganism holding portion 3, which fibers of the multi-thread 5 are formed in a relaxed state so that they can be spaced apart from each other in the wastewater with a multi-thread 5 comprising a plurality of fibers are formed in multiple stages and a loop it is. In FIGS.1 and 2, a multi-thread 5 in the state of blurring the solid outline.

Wastewater treatment twisted carrier 1' shown in FIG. 2 is obtained by the core 2 of the wastewater treatment carrier 1 of the twisted spiral.

Diameter D₂ of the wastewater treatment twisted carrier 1' is desirably 60 mm to 100 mm, and more preferably in the range of 70 mm to 80 mm. Range of pitch p is also 60mm to 100mm of the spiral is desirable.

In this wastewater treatment twisted carrier 1' , microorganism holding portion 3, so that the fibers of each multi-thread 5 as like as a yarn comprising a plurality of fibers in the wastewater with forms in multiple stages and a loop can be separated from each other relaxed state is formed in, because the twisted further helically, with multi-threads 5 of loop are arranged to hold a predetermined interval in the circumferential direction over 360 degrees, the multi-threads 5 in the wastewater because fibers are assumed to be separate from each other, a large specific surface area, large void ratio, since the uniform flow velocity is likely to produce flow resistance is low in the tank of the wastewater flow, scavenging activity of floating materials is high.

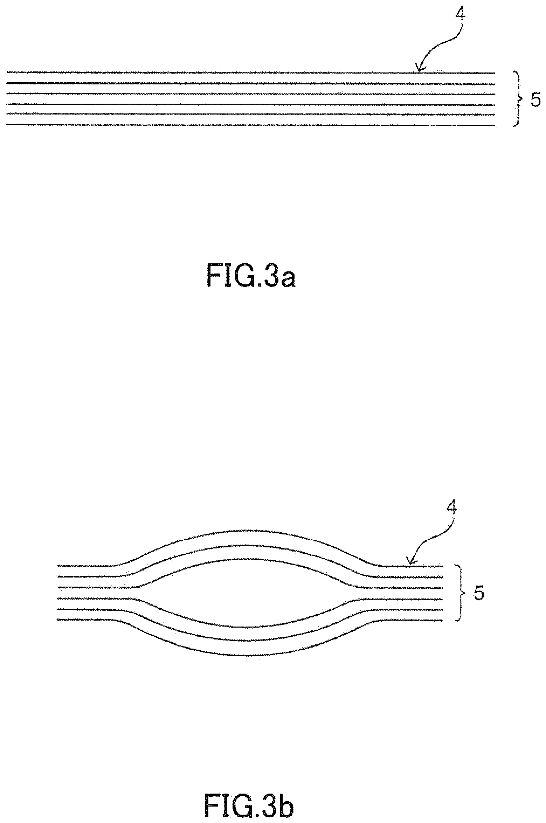

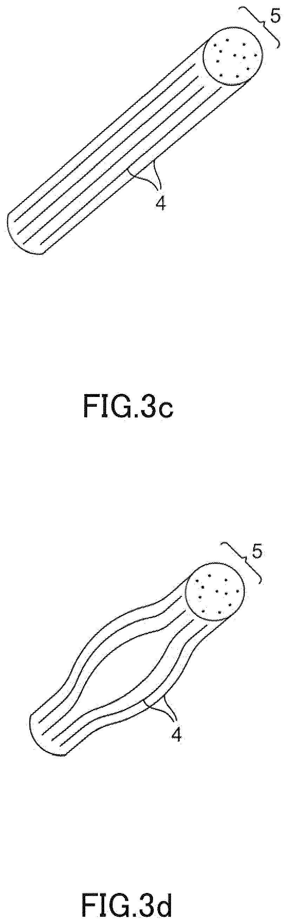

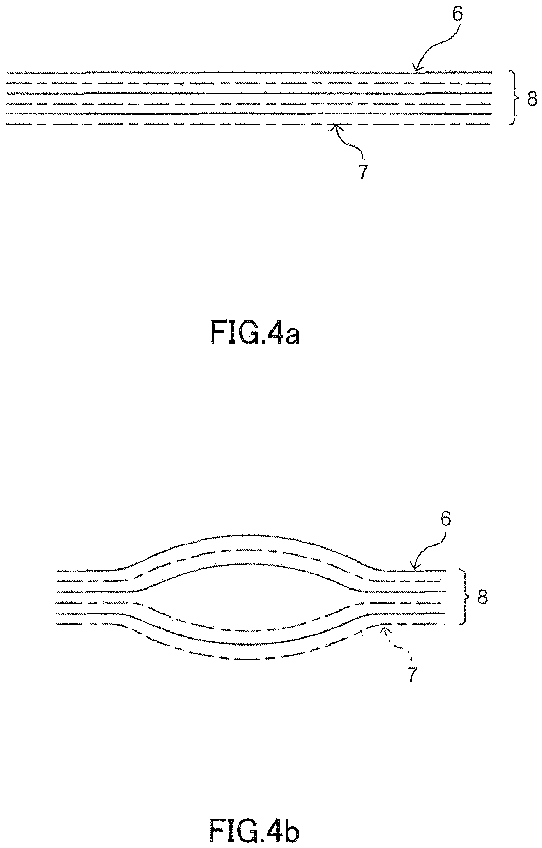

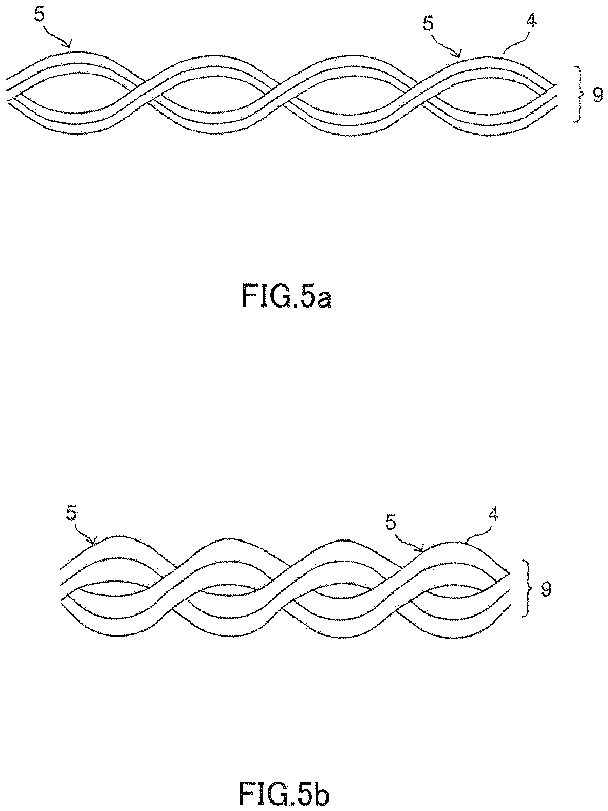

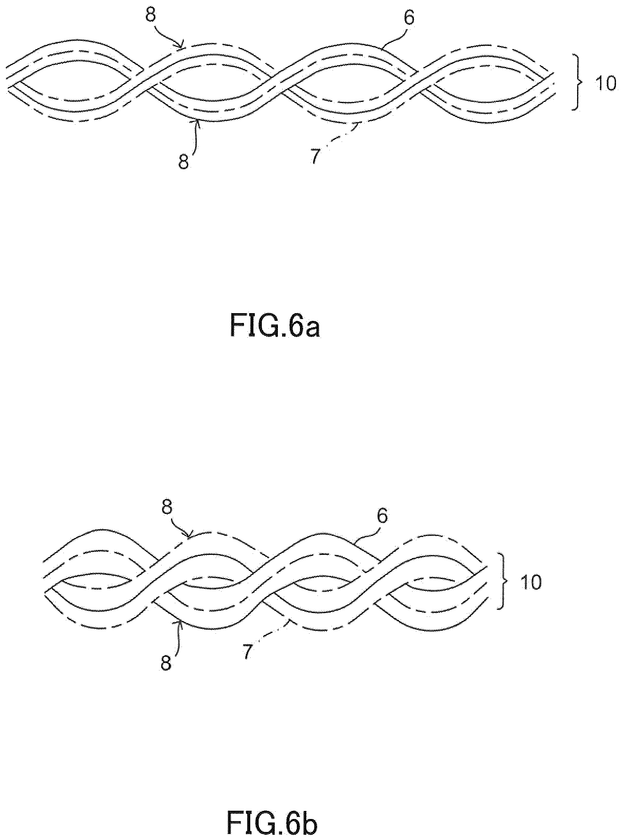

FIG.3 to FIG.6 in which the structure of a typical multi-thread according to the present invention are shown schematically. FIG.3 shows a multi-thread 5 in a state in which a bundle of multiple fibers 4. The multi-thread 5 forms two patterns; for instance as shown in FIG.3a and FIG.3c, each fiber 4 is in close contact in the stretched state of being stretched in the longitudinal direction, as shown in FIG.3b and FIG.3d, multiple fibers 4 provide a texture that is soft and spreads in the radial direction because each fiber 4 can be separated in a relaxed state of being relaxed in the direction. FIG.4 shows a mixed multi-thread 8 consisting of the hydrophilic fibers 6 indicated by the solid line and the hydrophobic fibers 7 indicated by the chain line. The mixed multi-thread 8 forms two patterns; for instance as shown in FIG.4a, the hydrophilic fibers 6 and hydrophobic fibers 7 are brought into close contact in the stretched state of being stretched in the longitudinal direction as shown in FIG.4b, the hydrophilic fibers 6 and hydrophobic fibers 7 provide a texture that is soft and spreads in the radial direction since it apart and each hydrophilic fibers 6 and hydrophobic fibers 7 in the relaxed state of being relaxed in the direction. FIG.5 shows a multi-twisted multi-thread 9 twisted loosely multi-thread 5 in the state in which a bundle of multiple fibers 4. The multi-twisted multi-thread 9 forms two patterns; for instance as shown in FIG.5a, the fibers 4 are in close contact in the stretched state of being stretched in the longitudinal direction, as shown in FIG.5b, multiple fibers 4 provide a texture that is soft and spreads in the radial direction because each fiber 4 can be separated in the state. FIG.6 shows a mixed multi-twisted multi-thread 10 of loosely twisted hydrophilic and hydrophobic fibers mixed multi-thread 8. The mixed multi-twisted multi-thread 10 forms two patterns; for instance as shown in FIG.6a, the hydrophilic fibers 6 and hydrophobic fibers 7 are brought into close contact in the stretched state of being stretched in the longitudinal direction, as shown in FIG.6b, the hydrophilic fibers 6 and hydrophobic fibers 7 provide a texture that is soft and spreads in the radial direction since it apart and each hydrophilic fibers 6 and hydrophobic fibers 7 in the relaxed state of being relaxed in the longitudinal direction as. Multi-thread5,8,9,10 according to the present invention has the characteristic that the surface area per unit length is large. Because of the balance between the surface area maintenance and fiber strength, single fiber constituting the multi-thread 5,8,9,10 is desirably diameter 0.003 mm to 0.1 mm, more preferably 0.01mm to 0.06mm. Incidentally, the number of fibers that form multi-thread 5,8,9,10 may be suitably selected in accordance with the carrier size, required strength, etc., but 50 to 200 present is suitable. For mixed multi-thread 8, the ratio of hydrophilic fibers 6 and hydrophobic fibers 7 is desirably 2:8 to 8:2.

A multi-hard-twisted multi-thread deffering from the multi-twisted multi-thread 9 obtained by bundling a large number of fibers such as a multi-hard-twist yarn and further tightly twisted, in the multi-hard-twisted multi-thread yarn having such a structure, the fibers are not separated from each other even in the wastewater, the action and effect of the present invention cannot be exhibited.

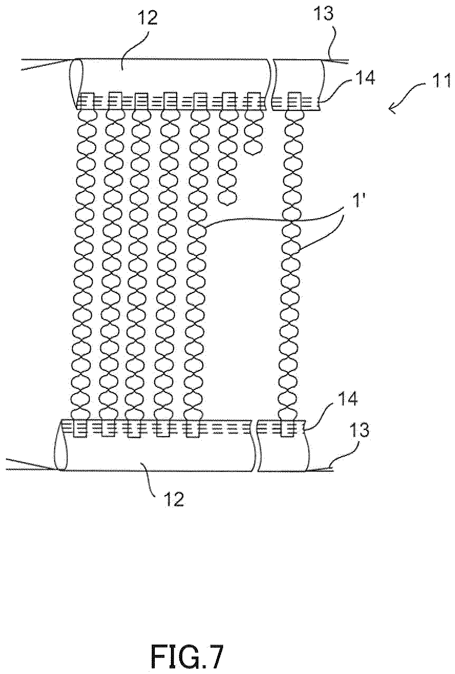

The structure of the wastewater treatment carrier module 11 according to the present invention is typically shown in FIG. 7.

The wastewater treatment carrier module 11 is a by parallel multiple wastewater treatment twisted carriers 1' in a loop-shaped carrier fixing canvas 12 at both ends to a vertical one and fixed by sewing in the sewing portion 14. The distance between each wastewater treatment twisted carrier 1' should just be the diameter D₂ of the wastewater treatment twisted carrier 1' and more than equivalent. Each of the two ends of the loop-shaped carrier fixing canvas 12 may be settled to working by fixing the carrier module fixing strings 13.

Multi-thread constituting the wastewater treatment twisted carrier 1', may be used any of those shown in FIGS. 3 to 6.

It is possible to select a wastewater treatment carrier that meets the intended use of such wastewater treatment purification conditions.

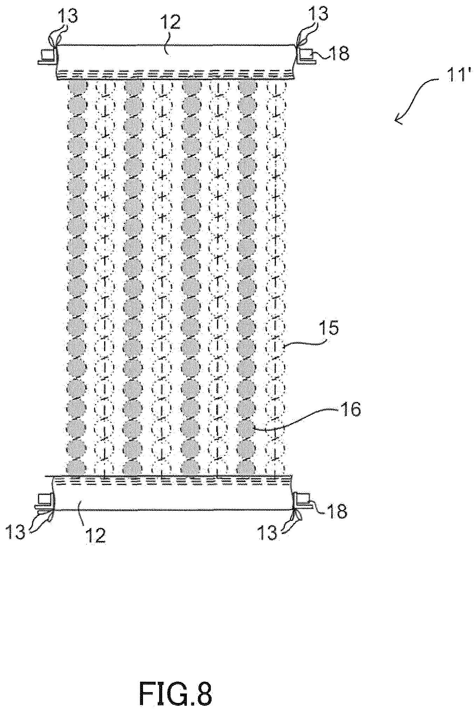

FIG.8 shows an example of a wastewater treatment carrier alternately module 11' in which the hydrophilic wastewater treatment twisted carriers 15 consisting of multiple fibers of hydrophilic fibers (see open circles part) and hydrophobicity wastewater treatment twisted carriers 16 consisting of multiple fibers of hydrophobic fibers (see black circle portions) are arranged in parallel alternately.

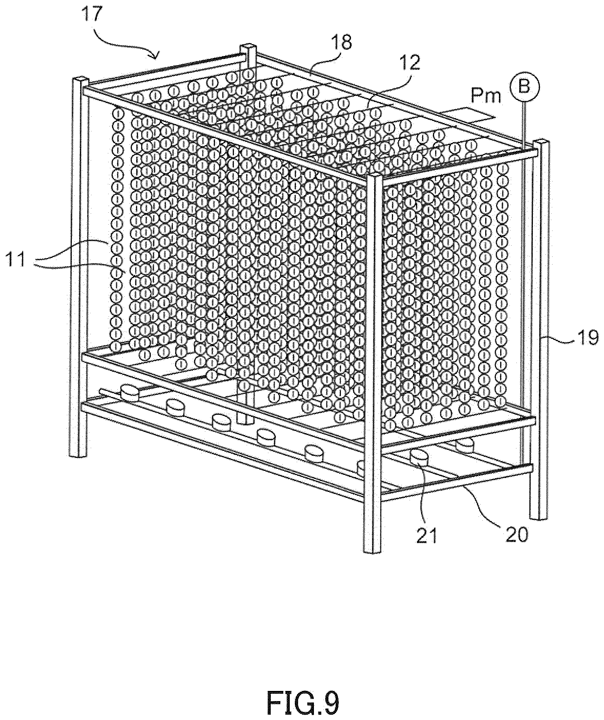

The structure of the wastewater treatment carrier unit 17 according to the present invention is typically shown in FIG.9.

This waste-water-treatment carrier unit 17 has the structure arranged and fixed to the carrier fixing canvas 12 of the wastewater treatment carrier module 11 through the carrier module fixing bar 18 at two or more parallel at the carrier module fixing grid element 19. In this case, the carrier module fixing string 13 fixed to both end portions of the carrier fixing canvas 12 in connection with a carrier module fixing grid element 19, it may be fixed to a state of being stretched carrier fixing canvas 12 in the longitudinal direction. By adjusting the distance between the upper and lower carrier module fixing bar 18, it may be variably adjusted according to the wastewater treatment situation longitudinal stretched tension of wastewater treatment carrier module 11.

The air diffuser fixing grid element 20 has been arranged in the lower part of the aforementioned carrier module fixing grid element 19, and it is equipped with the air diffuser 21.

Also, wastewater treatment carrier module 11, the spacing (carrier module pitch) pₘ of the carrier module 11 and the carrier module 11 is 70 mm ∼ 100 mm is desirable.

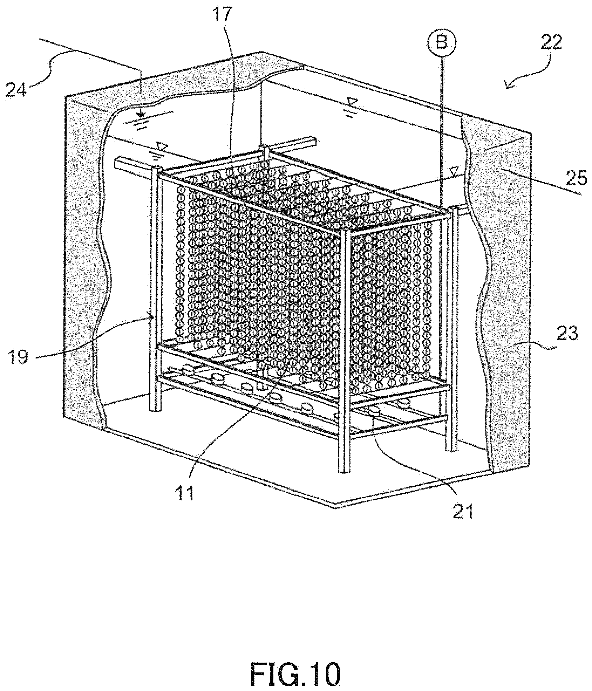

The structure of the wastewater treatment apparatus 22 which installed the wastewater treatment carrier unit 17 in the wastewater treatment tank 23 according to the present invention is typically shown in FIG.10.

Thus, it is possible to apply the wastewater treatment carrier unit 17 as it is as wastewater treatment apparatus 22 installed in the existing wastewater treatment tank 23.

On the other hand, it may be installed wastewater treatment carrier module 11 separately from the air diffuser 21 by construction circumstances in the case of newly established entire case or device air diffuser 21 to an existing wastewater treatment tank 23 is already provided.

The number of wastewater treatment twisted carrier 1' to be used, the size and wastewater treatment of wastewater treatment tank 23 may be determined depending on the processing conditions. About 50% of the carrier filling rate is desirable to the capacity of the wastewater treatment tank 23.

### Embodiment

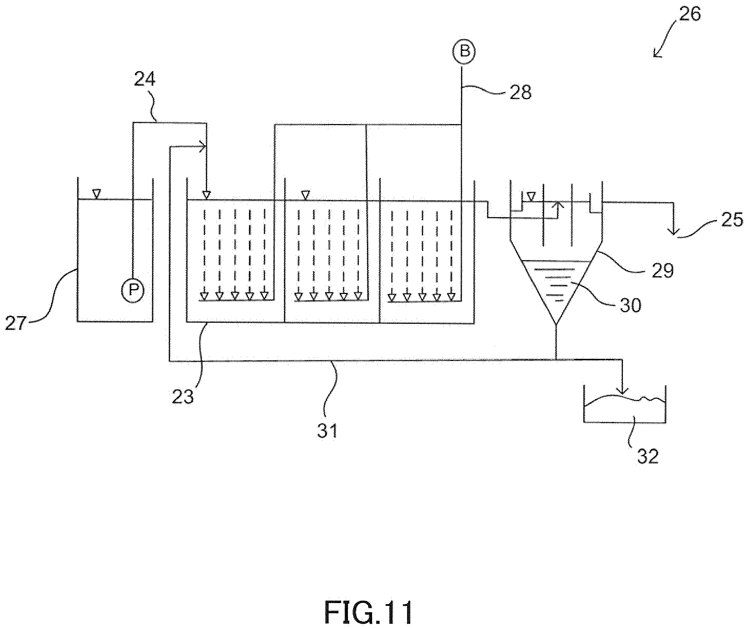

The structure and wastewater treatment process flow of a conventional wastewater treatment apparatus 26 are typically shown in FIG.11. In an embodiment of common biological treatment of the conventional wastewater treatment apparatus 26, the raw water 24 in the raw water tank 27, is introduced into the wastewater treatment tank 23 by the pump P, is aeration processed with air 28 sent from the blower B.

Then, it is separated into treated water 25 and sludge 30 at the solid-liquid separation tank 29, treated water 25 is discharged. Further, the separated sludge 30, along with the returned to the wastewater treatment tank 23 by the sludge return path 31 is withdrawn as excess sludge 32 is treated and disposed of invested significant cost as industrial waste.

In the biological treatment of this conventional waste water treatment equipment 26, the excess sludge amount of removal organic substance quantity occurred 30% - 40%, and drew out, and since it will be necessary to dry and needs to process and dispose, immense processing and disposal cost have arisen.

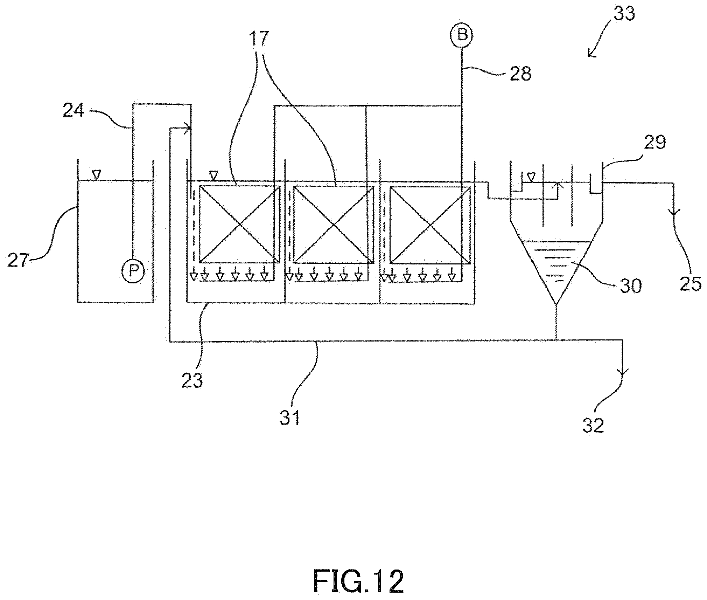

The structure of the wastewater treatment apparatus 33 according to the present invention is typically shown in FIG.12.

Wastewater treatment apparatus 33 according to the present invention, has composition which has arranged the wastewater treatment unit 17 provided with the wastewater treatment carrier module 11 shown in Fig.7 or the waste-water-treatment carrier alternately module 11' shown in Fig.8 in the waste water treatment vessel 23 which removed the air diffuser of the conventional waste water treatment equipment 26.

In the case of the necessity of additional wastewater treatment carrier unit 17 is not limited to the number of installed, it can be placed to fit appropriately to the size of the wastewater treatment tank 23 of the conventional wastewater treatment apparatus 26.

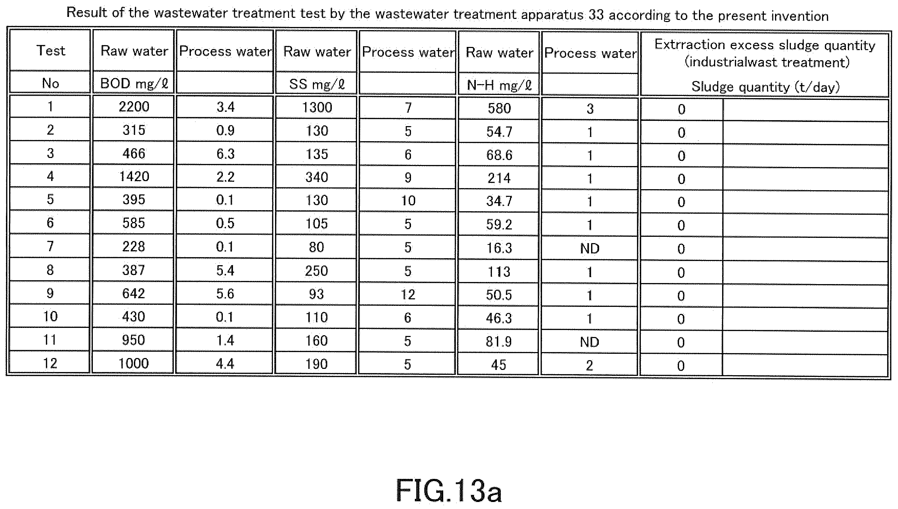

The wastewater treatment test results using the present invention apparatus 33 in the case where the present invention device 33 shown in FIG.12 to improve the wastewater treatment apparatus 26 in a conventional existing shown in FIG.11 is shown in the table of FIG.13a.

The wastewater treatment carrier used in the test is equivalent to a wastewater treatment twisted carrier 1' using a hydrophilic-hydrophobic mixed multi-twisted multi-thread 10.

Hydrophilic fibers 6 used here are nylon, fiber diameter is 0.03 mm, number of fibers is 98.

Similarly, hydrophobic fibers 7 are vinylidene, fiber diameter is 0.06 mm, number of fibers is 42. Each ratio is fiber diameter 1:2, number of fibers is 7:3. Diameter D₂ of the carrier is 70 mm, the pitch p of the spiral is 70 mm, the pitch p_{c} between the twisted carrier is 80 mm. Then, the pitch pₘ between the carrier modules is 80 mm, the carrier filling rate for the wastewater treatment tank 23 is 50%.

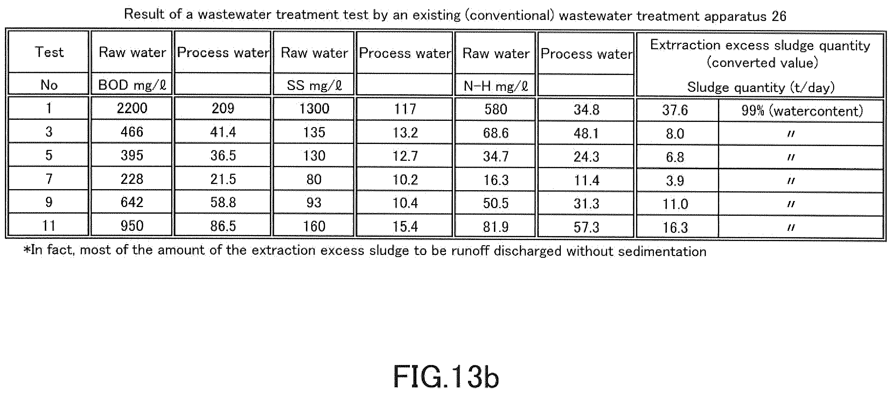

A wastewater treatment test results using the wastewater treatment apparatus 26 of the existing (conventional) shown in FIG.11 is shown in the table of FIG.13b. It experimented with the same conditions Nos. 1,3,5,7,9,11 of the present invention. Incidentally, excess sludge withdrawal amount in the table of FIG.13b(converted value) existing in the wastewater treatment apparatus 26 (prior art) is a value converted as a 30% sludge conversion rate to the inflow raw water quantity per day, since in practice the whole amount of sludge is discharged without depositing in the apparatus.

Wastewater treatment conditions in this case are as follows.
Raw water: Dairy-products processing wastewater
Planning process water quantity: 650 meters³/day
Planning raw water quality: BOD800mg / 1, SS (loating suspended solids) 250mg / 1, H-N (n-hexane extract) 200 mg / 1
Planning treated water quality: BOD15mg / 1, SS (floating suspended solids) 25 mg / 1 or less, N-H (n-hexane extractives) 5 mg/l or less
HRT (: hydraulic retention time): 24 hours

River discharge regulation value of each data in FIG.13, "BOD20mg/l or less", "SS25mg/l or less", "N-H (animal and vegetable oils and fats) 5 mg/l or less (the current most stringent regulation value), N- H (mineral oils) 3mg / 1 or less (the current of the most stringent regulation value)".

Verification of where wastewater treatment apparatus 33 according to the present invention in Table of FIG.13a of Experiment No. 1 to 12 data, each value in the treated water is "BOD6.3mg/l or less", "SS12mg/l or less", " H-N3mg/l or less ", it becomes the process water quality each respective data is lower than the river discharge regulation values. The result of the verification may be very excellent.

And, it did not occur for the excess sludge.

On the other hand, in Table of FIG.13b in the existing (conventional) verification of the wastewater treatment apparatus 26, Experiment No. 1,3,5,7,9,11 data, each value in the treated water is "BOD21.5mg/l or more", "SS10.2mg/l or more", "H-N11.4mg/l or more" it becomes a process water quality is higher than the river discharge regulation value each data respectively, there is an inconvenience that it can not be discharged into rivers.

Then, there is an inconvenience that occurs 3.9 tons / day also in the minimum amount for the excess sludge (converted value). Without this large amount of extraction excess sludge to sedimentation in a solid-liquid separation tank 29, it was also a disadvantage that most of the amount would be runoff discharged.

Therefore, according to the present invention, it is understood that the operation and effect are very excellent as compared with the prior art is exhibited.

### EXPLANATIONS OF LETTERS OR NUMERALS

1 wastewater treatment carrier
1' wastewater treatment twisted carrier
2 core portion
3 microorganism holding portion
4 fiber
5 multi-thread
6 hydrophilic fiber
7 hydrophobicity fiber
8 mixed multi-thread (hydrophilicity-hydrophobicity)
9 multi-twisted multi-thread
10 mixed multi-twisted multi-thread (hydrophilicity-hydrophobicity)
11 wastewater treatment carrier module
11' wastewater treatment carrier alternately module
12 carrier fixing canvas
13 carrier module fixing string
14 sewing portion
15 hydrophilic wastewater treatment twisted carrier
16 hydrophobicity wastewater treatment twisted carrier
17 wastewater treatment carrier unit
18 carrier module fixing bar
19 carrier module fixing grid element
20 diffuser fixing grid element
21 air diffuser
22 wastewater treatment apparatus
23 wastewater treatment tank
24 raw water
25 treated water
26 wastewater treatment apparatus
27 raw water tank
28 air 29 solid-liquid separation tank
30 sludge
31 sludge return path
32 excess sludge
33 wastewater treatment apparatus
p: spiral pitch
p_{c}: pitch of the twisted carrier
pₘ : carrier module pitch
d: width of the core portion
D₁ : width of the microorganisms holding portion
D₂ : diameter of the twisted carrier
B: Blower
P: Pump

## Claims

1. A wastewater treatment carrier comprises a core portion and a microorganism holding portion is formed with multi-threads **characterizing in that** the fibers of the multi-threads are formed in a relaxed state so that the fibers can be spaced apart from each other in the wastewater with forming in multiple stages and a loop.

2. Wastewater treatment carrier according to claim 1, wherein said multi-thread **characterized by** comprising the hydrophilic fibers.

3. Wastewater treatment carrier according to claim 1, wherein said multi-thread **characterized by** comprising the hydrophobic fibers.

4. Wastewater treatment carrier according to claim 1, wherein the multi-thread is a mixed multifiber obtained by mixing a hydrophilic fiber and a hydrophobic fiber.

5. Wastewater treatment carrier according to any one of claims 1 to 4, wherein the multi-thread is the multi-twisted multi-thread.

6. A wastewater treatment carrier module formed by a parallel arrangement a plurality of wastewater treatment carrier, the wastewater treatment carrier is **characterized in that** the wastewater treatment carrier according to any one of claims 1 to 5.

7. A wastewater treatment carrier module formed by a parallel arrangement a plurality of wastewater treatment carrier, wherein parallel arranged wastewater treatment carrier according to the second invention and wastewater treatment carrier according to the third invention alternately.

8. Wastewater treatment carrier unit is **characterized in** the wastewater treatment carrier modules of the sixth invention or the seventh invention are multiple parallel arrangement of, and it comprises air diffusers thereunder.

9. A wastewater treatment apparatus having a wastewater treatment carrier module according to claim 6 or claim 7 in the wastewater treatment tank, and **characterized in that** it has an air diffuser at the bottom of the wastewater treatment carrier module of the processing tank.
